# EUROPÄISCHE PATENTSCHRIFT

(11) **EP 1 051 568 B1**
(45) Veröffentlichungstag und Bekanntmachung des Hinweises auf die Patenterteilung: **14.05.2003**
(21) Anmeldenummer: 99906179.9
(22) Anmeldetag: 21.01.1999
(51) Int. Cl.: F03B 3/12, F01D 5/28

(54) **VERFAHREN ZUM HERSTELLEN EINES VERSCHLEIFSSGEFÄHRDETEN BAUTEILES EINER STRÖMUNGSMASCHINE**
METHOD FOR PRODUCING A WEAR-ENDANGERED COMPONENT OF A TURBO-MACHINE
PROCEDE POUR PRODUIRE UN COMPOSANT D'UNE TURBOMACHINE EXPOSE A L'USURE

(30) Priorität: 30.01.1998 DE 19803589
(43) Veröffentlichungstag der Anmeldung: 15.11.2000
(73) Patentinhaber: Voith Siemens Hydro Power Generation GmbH & Co. KG, 89522 Heidenheim (DE)
(72) Erfinder: SCHNEIDER, Christoph, D-89520 Heidenheim (DE)
(74) Vertreter: Dr. Weitzel & Partner
(86) Internationale Anmeldenummer: EP9900372
(87) Internationale Veröffentlichungsnummer: WO99039097

(56) Entgegenhaltungen:
- EP-A- 0 401 187
- DD-A- 96 883
- FR-A- 2 631 268
- US-A- 3 574 924
- US-A- 4 326 833
- US-A- 4 629 160
- US-A- 5 228 830
- US-A- 5 261 480

## Beschreibung

Die Erfindung betrifft ein Verfahren zum Herstellen eines Bauteiles einer Strömungsmaschine. Sie betrifft ebenso ein Verfahren zum Instandsetzen eines solchen Bauteiles. Als Strömungsmaschine kommen vor allem Wasserturbinen und Pumpen in Betracht, aber auch andere Strömungsmaschinen, zum Beispiel Schiffspropeller. Ganz allgemein handelt es sich dabei um solche Strömungsmaschinen, die mit Flüssigkeiten in Berührung kommen. Als Bauteile kommen insbesondere Schaufeln von Strömungsmaschinen in Betracht, zum Beispiel Turbinenschaufeln.

Die strömungsführenden Flächen von Strömungsmaschinen haben einen entscheidenden Einfluß auf das Arbeitsverhalten der Maschine, insbesondere auf deren Wirkungsgrad. Dies gilt ganz besonders für die Schaufein von Wasserturbinen und Pumpen, aber auch von Schiffspropellern. Dabei kommt es zum einen auf die Großform der Schaufel an. Diese ist häufig räumlich gekrümmt, zum Beispiel bei Kaplan- oder Francisturbinen. Es kommt aber auch sehr stark auf die Oberflächenbeschaffenheit an. Dabei strebt man eine möglichst geringe Rauhheit an. Deshalb werden die Oberflächen von Turbinenschaufeln soweit wie möglich geglättet. Die verschiedenen Glättungsverfahren reichen bis zum Hochglanzpolieren.

Insbesondere Wasserturbinen sind in mehr oder minder starkem Maße Einflüssen ausgesetzt, die zu einer Veränderung der Gestalt der strömungsführenden Flächen führen. Besonders gefährlich ist die Erosion die durch hohe Sandkonzentration im Wasser auftritt. Gefürchtet ist auch die Kavitation, die im Extremfall zu einem Zerfressen von Turbinenschaufeln führen kann. Diese Erscheinungen führen zu einer Veränderung der Gestalt der Turbinenschaufeln, was aus den obengenannten Gründen sehr nachteilig ist.

US 5,261,480 zeigt ein Verfahren zum Wiederherstellen von Laufschaufeln, insbesondere Gasturbinenschaufeln. Da es bei dem gezeigten Verfahren aufgrund des Einsatzbereiches der Schaufeln wichtig ist, einkristalline Strukturen zu erzeugen, wird der Verschleißteil bis auf einen einkristallinen Kernbereich entfernt und anschließend erneut durch ein spezielles Gießverfahren in eine einkristalline Struktur angegossen.

EP 0 401 187 zeigt ein Verfahren zur Wiederherstellung von Laufschaufeln und Leitschaufeln in Dampfturbinen. Dabei werden ausschließlich Laufschaufeln und Leitschaufeln wiederhergestellt, die einen Erosionsschaden aufweisen. Dieser Erosionsschaden tritt aufgrund des Expansionsverlaufes ausschließlich in den Endstufen der Niederdruckteile der Dampfturbinen auf, da dort der Dampf soweit entspannt wurde, dass er nicht mehr ausreichend überhitzt ist. Besonders ausgeprägt ist diese Problematik bei Kernkraftwerksturbinen. Die Wiederherstellung einer Schaufel von Dampfturbinen erfolgt durch isostatisches, heißes Pressen von Metallpulver an den stehen gebliebenen Teil einer Schaufel in einer evakuierten Gießform. Die Gießform wird dadurch erstellt, dass zunächst an die abgetragene Schaufel ein Bereich aus Wachs, Plastik oder einer Legierung mit niedriger Schmelztemperatur angefügt wird, um so das originale Profil nachzubilden. Eine solche Nachbildung ist ungenau und hat den Nachteil, dass mehrere Arbeitsschritte erforderlich sind, weil der weiche Teil auch wieder entfernt werden muss.

Der Erfindung liegt die Aufgabe zugrunde, Maßnahmen anzugeben, mit denen verschleißgefährdete Bauteile derart gestaltet werden können, daß der Verschleiß in geringerem Maße als seither auftritt. Desgleichen liegt der Erfindung die Aufgabe zugrunde, Maßnahmen anzugeben, mit denen verschlissene Teile wieder instandgesetzt werden können, und zwar derart, daß künftiger Verschleiß nicht mehr oder in verringertem Maße auftritt.

Diese Aufgabe wird durch die Merkmale des unabhängigen Anspruches gelöst.

Der Erfinder hat damit verblüffend einfache Wege angegeben, mit welchen dem Verschleiß von gefährdeten Bauteilen von Strömungsmaschinen wirksam und dauerhaft begegnet werden kann.

Die Erfindung ist anhand der Zeichnung näher erläutert. Darin ist im einzelnen folgendes dargestellt:
- Fig. 1: zeigt in schematischer Darstellung eine hydraulische Anlage mit einer Kaplanturbine.
- Fig. 2: mit den Unterfiguren 2a bis 2f veranschaulicht den Ablauf eines erfindungsgemäßen Herstellungsverfahrens.
- Fig. 3: mit den Unterfiguren 3a bis 3f veranschaulicht den Ablauf eines erfindungsgemäßen Instandsetzungsverfahrens.
- Fig. 4: zeigt verschiedene Möglichkeiten der Oberflächengestaltung,
- Fig. 5: veranschaulicht das Einsetzen eines leistenförmigen Verschleißteiles in das Hauptteil einer Schaufel.

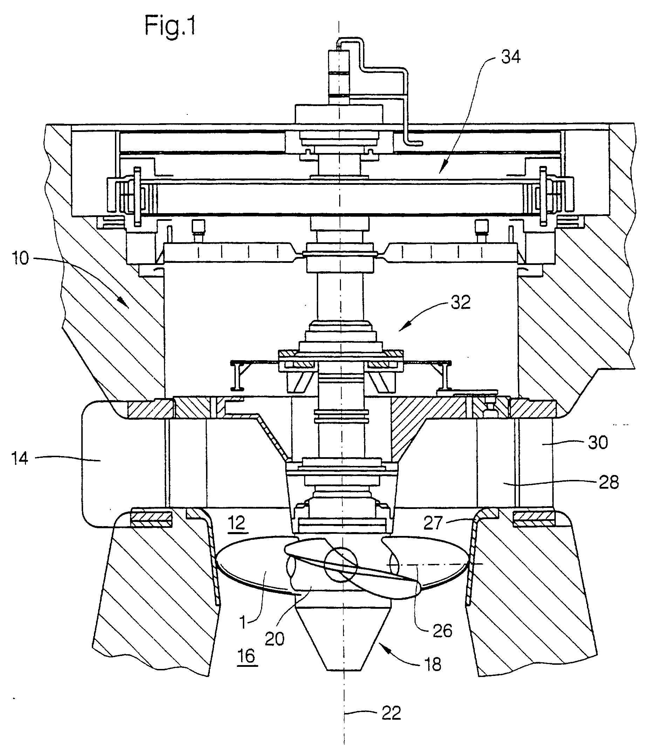

Die in Figur 1 dargestellte hydraulische Anlage 10 umfaßt einen Strömungskanal 12, in dem Wasser von einem oberen Niveau zum stromaufwärtigen Ende der Anlage 10 fließt und zu einem stromabwärtigen Abgabebereich 16 gelangt. Die Anlage 10 umfaßt eine Turbine 18 mit einer Nabe 20, die eine Längsachse 22 aufweist, ferner eine Mehrzahl von Laufschaufeln 1, die verstellbar an der Nabe 20 angeordnet sind. Jede Schaufel 1 ist um eine Drehachse 26 verdrehbar, die sich im wesentlichen senkrecht zur Längsachse 22 erstreckt. Die Turbine 18 ist im vorliegenden Falle vertikal dargestellt. Die Erfindung ist jedoch auch anwendbar auf Turbinen, deren Längsachse um einen Winkel gegen die Vertikale geneigt ist, beispielsweise mit einer horizontalen Längsachse, je nach Gestaltung des Strömungskanales 12. Außerdem können die Drehachsen 26 relativ zur Längsachse 22 auch geneigt sein, somit nicht unbedingt senkrecht zur Längsachse verlaufen.

Die dargestellte Turbine ist eine Kaplanturbine. Selbstverständlich läßt sich die Erfindung auch bei allen anderen Turbinenarten anwenden, beispielsweise bei Francisturbinen.

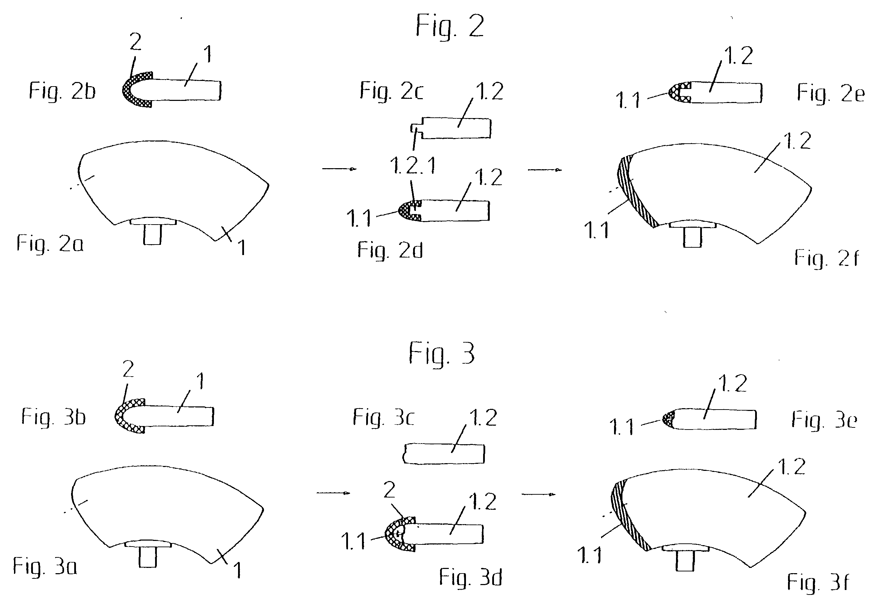

Figur 2 veranschaulicht die einzelnen Schritte eines erfindungsgemäßen Herstellungsverfahrens zum Herstellen einer Turbinenschaufel mit einem verschleißgefährdeten Bereich.

Fig. 2a zeigt in Draufsicht die Schaufel 1 einer Kaplanturbine. Fig. 2b zeigt wiederum die Schaufel 1 in Seitenansicht.

Die Schaufel 1 ist gemäß der Erfindung aus zwei Teilen aufgebaut. Diese sind in dieser Schrift als "Verschleißteil" 1.1 und "Hauptteil" 1.2 bezeichnet. Fig. 2c zeigt Hauptteil 1.2. Fig. 2d zeigt Verschleißteil 1.1 und Hauptteil 1.2; diese beiden sind miteinander vereinigt. Die Herstellung der beiden Teile, Verschleißteil 1.1 und Hauptteil 1.2 geht wie folgt vor sich:

Zunächst wird Schaufel 1 auf konventionelle Weise komplett erstellt. Es wird somit die Schaufel gegossen, und die entstandene Rohform wird auf konventionelle Weise bearbeitet, beispielsweise durch NC-Fräsen oder Schleifen.

Sodann wird eine Formmasse um den verschleißgefährdeten Teil der fertigen Schaufel herumgelegt, so daß eine Negativform 2 gebildet wird - siehe Figur 2b.

Als weiterer Schritt wird von der fertigen Schaufel der verschleißgefährdete Teil auf definierte Weise abgetragen. Es verbleibt somit Hauptteil 1.2 der Schaufel. Sodann wird mit Hilfe der Form 2 Verschleißteil 1.1 erneut durch Gießen erzeugt. Dabei wird als Vergußmaterial ein hochresistentes Material verwendet, beispielsweise Polyurethan.

Eine zuverlässige Verbindung zwischen Verschleißteil 1.1 und Hauptteil 1.2 kann auf verschiedene Weise hergestellt werden: Kleben, Schrauben, Schweißen, Zapfen. Wie man aus den Fig. 2c und 2d erkennt, weist Hauptteil 1.2 einen Zapfen 1.2.1 auf. Demgemäß weist Verschleißteil 1.1 eine Nut auf. Zapfen 1.2.1 und entsprechende Nut wurden ebenfalls beim Gießen hergestellt. Auch wäre es möglich, den Zapfen nachträglich einzusetzen oder anzufräsen.

Durch die gezeigte Zapfen-Nut-Verbindung wird bereits eine gewisse Fixierung geschaffen. Die Festigkeit dieser Verbindung kann durch geeignete Maßnahmen gesteigert werden, beispielsweise durch mechanisches Verschrauben oder durch Aufbringen von Klebstoff oder durch Verschweißen oder durch formschlüssiges Vergießen mit Hilfe von Bohrungen im Zapfen 1.2.1.

Fig. 3 veranschaulicht die einzelnen Schritte eines Verfahrens zum Instandsetzen einer Schaufel 1. Diese ist im Bereich der Eintrittskante verschlissen - siehe Fig. 3c.

Hierbei wurde wie folgt vorgegangen: Man erkennt in Fig. 3a wiederum die Schaufel 1 in neuem Zustand, d.h. vor dem Gebrauch. Schritt 3b veranschaulicht den selben Schritt wie Schritt 2b beim Herstellungsverfahren. Eine Formmasse wird um den Eintrittskantenbereich der Schaufel 1 in deren neuem Zustand herumgelegt, so daß eine Form 2 gebildet wird. Diese Form 2 wird aufbewahrt. Hat die Schaufel 1 den in Fig. 3c dargestellten Zustand durch Verschleiß erreicht, so daß das dort gezeigte Hauptteil 1.2 verblieben ist, so wird Form 2 mit Hauptteil 1.2 zusammengefügt - siehe Fig. 3d. Der entstehende Hohlraum wird nunmehr ausgefüllt mit einer Vergußmasse, zweckmäßigerweise mit Polyurethan.

Das Ergebnis sieht man in den Fig. 3e und 3f, die Ansichten analog der Fig. 3b und 3a darstellen. Die Schaufel 1 ist nunmehr wieder komplett. Sie setzt sich zusammen aus Verschleißteil 1.1 und Hauptteil 1.2.

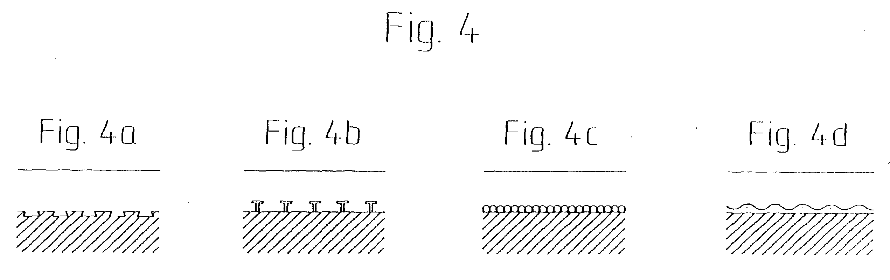

Um die Bindung zwischen Verschleißteil und Hauptteil möglichst zuverlässig zu machen, können die beteiligten Flächen mit Einbuchtungen und Ausbuchtungen versehen werden. Siehe die Fig. 4a bis 4e. Besonders günstig sind Vorsprünge gemäß 4b. Diese sind, wie man sieht, von T-förmigem Querschnitt. Dadurch findet eine formschlüssige Verbindung statt. Die Vorsprünge kommen alternativ zu den Zapfen 1.2.1 in Fig. 2c in Betracht.

Sollte versäumt worden sein, von dem Eintrittskantenbereich der Schaufel in neuem Zustand eine Form herzustellen, so könnte wie folgt vorgegangen werden: Es wird auf konventionelle Weise eine einzige Turbinenschaufel oder zumindest deren Eintrittskantenbereich hergestellt, d. h. gegossen und spanabhebend bearbeitet. Sodann wird von dem hierbei erzeugten Teil eine Form 2 gebildet so wie oben beschrieben. Nunmehr kann mit dieser Form auf die beschriebene Weise die verschlissene Schaufel ergänzt werden.

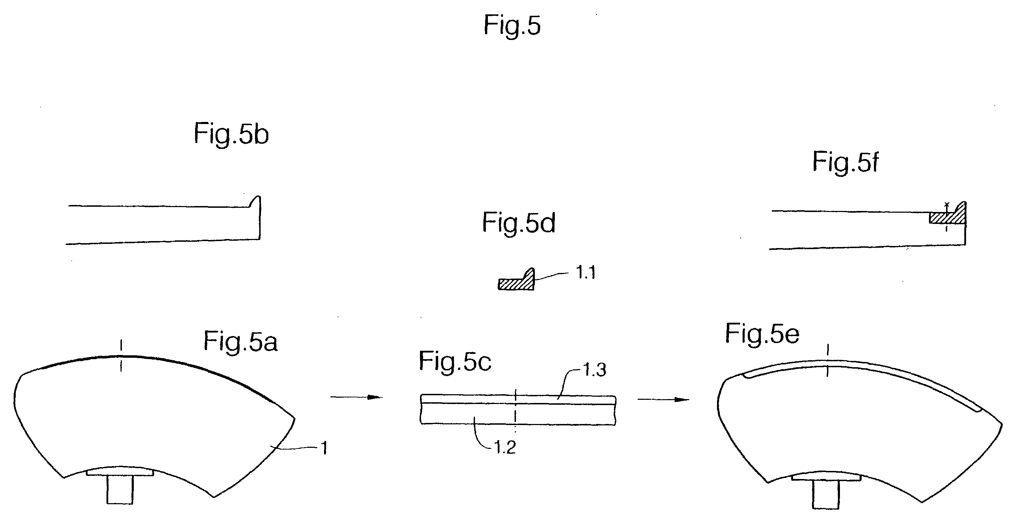

In Fig. 5 ist eine weitere Möglichkeit veranschaulicht, wie die Erfindung angewandt werden kann. Dabei zeigen die Figuren 5a und 5b - in Draufsicht und in Seitenansicht - eine Schaufel 1 einer Turbine. Diese Schaufel wird zunächst auf konventionelle Weise komplett hergestellt, d. h. gegossen, gefräst und gegebenenfalls geschliffen oder gar poliert.

Nach Abschluß dieser Fertigbearbeitung wird mit Hilfe der NC-Frästechnologie eine Nut konstanten Querschnitts in die gekrümmte Oberfläche eingearbeitet. Siehe Fig. 5c mit Nut 1.3. Die Nut ist demgemäß genauso räumlich gekrümmt wie die Schaufel.

In die Nut wird nunmehr ein Verschleißteil 1.1 eingesetzt. Dieses hat zunächst die Gestalt einer geraden Leisten. Diese Leiste 1.1 wurde auf konventionelle Weise angefertigt. Sie liegt zunächst als Strangprofil vor, sogenannte "Meterware", durch Extrudieren oder Fräsen erzeugt. Die Leiste besteht aus besonders verschleißfestem Material, wiederum beispielsweise aus Polyurethan. Sie ist biegsam und demgemäß auch an die räumlich gekrümmte Form des Hauptteiles 1.2 der Schaufel 1 anpaßbar. Die Befestigung erfolgt wiederum, wie oben erwähnt, durch Verschrauben, Kleben, Schweißen oder auf andere Weise, gegebenenfalls auch durch Kombination solcher Befestigungsmethoden.

## Patentansprüche

1. Verfahren zum Herstellen und Instandsetzen einer Schaufel (1) einer Wassrturbine oder einer Flüssigkeitspumpe mit einem verschleißgefährdeten Bereich, das heißt einem Verschleißteil (1.1), **gekennzeichnet durch** die folgenden Verfahrensschritte:
1.1 die Schaufel wird hergestellt;
1.2 es wird ein Abguss wenigstens von dem Verschleißteil (1.1) der fertigen Schaufel hergestellt, so dass eine Negativ-Form (2) gebildet wird;
1.3 der Verschleißteil (1.1) wird von der fertigen Schaufel abgetragen;
1.4 der Verschleißteil (1.1) wird als Einzelteil erneut erzeugt, **durch** Ausgießen der Negativ-Form (2) mit Polyurethan;
1.5 der erneut hergestellte Verschleißteil (1.1) wird mit der Schaufel verbunden;
1.6 wenn der Verschleißteil (1.1) **durch** Verschleiß während des Betriebes abgetragen ist, wird er **durch** Ausgießen der Negativ-Form (2) mit Polyurethan erneut erzeugt und mit der Schaufel verbunden.

## Claims

1. A method for producing or repairing a blade (1) of a water turbine or a liquid pump with a wear-endangered region, i.e. a wearing part (1.1),
**characterized by** the following method steps:
1.1 the blade is produced;
1.2 a casting is produced at least of the wearing part (1.1) of the finished blade, so that a negative mould (2) is formed;
1.3 the wearing part (1.1) is removed from the finished blade;
1.4 the wearing part (1.1) is produced again as a single part, by filling the negative mould (2) with polyurethane;
1.5 the newly produced wearing part (1.1) is connected with the blade;
1.6 once the wearing part (1.1) is removed by wear and tear during operation, it is produced again by filling the negative mould (2) with polyurethane and connected with the blade.

## Revendications

1. Procédé de fabrication et de réparation d'une aube (1) d'une turbine hydraulique ou d'une pompe pour liquides présentant une zone exposée à l'usure, c'est-à-dire une partie d'usure (1.1),
**caractérisé par** les étapes suivantes :
1.1 on fabrique l'aube ;
1.2 on fait une empreinte du moins de la partie d'usure (1.1) de l'aube achevée de manière à obtenir un moule négatif (2) ;
1.3 on enlève la partie d'usure (1.1) de l'aube achevée ;
1.4 on fabrique une nouvelle partie d'usure (1.1) sous forme d'une pièce d'usure détachée en coulant du polyuréthane dans le moule négatif (2) ;
1.5 on relie la partie d'usure (1) nouvellement fabriquée à l'aube;
1.6 quand la partie d'usure (1.1) est usée par le fonctionnement, on en fabrique une nouvelle en coulant du polyuréthane dans le moule négatif (2) et on la relie à l'aube.
